# EUROPÄISCHE PATENTSCHRIFT

(11) **EP 0 678 736 B1**
(45) Veröffentlichungstag und Bekanntmachung des Hinweises auf die Patenterteilung: **25.02.1998**
(21) Anmeldenummer: 94112719.3
(22) Anmeldetag: 16.08.1994
(51) Int. Cl.: G01G 13/10, G01G 13/02, B28C 7/06, B65G 53/12, B65G 53/36

(54) **Vorrichtung zum Zumessen von pulver- oder granulatförmigem Wägegut**
Device for measuring out powdery or granular goods to be weighed
Dispositif pour attribuer des produits à peser pulvérulents ou granulaires

(30) Priorität: 23.04.1994 DE 4414233
(43) Veröffentlichungstag der Anmeldung: 25.10.1995
(73) Patentinhaber: Würschum GmbH, D-73744 Ostfildern (DE)
(72) Erfinder: Würschum, Gerhard, Dipl.-Ing., D-73760 Ostfildern (DE); Würschum, Hubert, Dipl.-Ing., D-73760 Ostfildern (DE)
(74) Vertreter: Vetter, Hans, Dipl.-Phys. Dr.

(56) Entgegenhaltungen:
- EP-A- 0 168 298
- DE-A- 2 758 346
- DE-A- 3 512 826
- DE-A- 3 834 191
- DE-B- 1 272 014
- DE-U- 8 900 498
- US-A- 4 685 810

## Beschreibung

Die Erfindung betrifft eine Vorrichtung zum Zumessen von pulver- oder granulatförmigem Wägegut nach dem Oberbegriff des Anspruchs 1.

Aus der EP-A1-168 298 ist eine Vorrichtung zur überdruckkohlestaubdosierung gemäß dem Oberbegriff des Anspruchs 1 bekannt, bei der eine Pumpe am dichten Wägebehälter einen Förderdruck erzeugt. Die Entkopplung geschieht dabei durch Kompensatoren. Die technische Realisierung solcher Kompensatoren ist jedoch häufig sehr kompliziert, da der Wägebehälter beim Einfüllen eine Entlüftung benötigt, beim Wiegen entkoppelt sein muß und beim Austragen des Wägeguts dichtend verschlossen sein muß.

Eine ähnliche Vorrichtung mit eine Federdosierung ist aus der DE-A1-351 2826 bekannt, bei der die Abdichtung des Wägebehälters durch Klappen erfolgt und eine Entkopplung durch Spalte erreicht wird. Bei Pulvern oder Granulaten würden die Spalte mit Kompensatoren abgedeckt werden. Auch hier tritt dieselbe bereits beschriebene Problematik beim einerseits dichtenden Abschließen und andererseits Entkoppeln auf.

Ein aus der DE-A1-275 8346 bekannter Wägebehälter ist mit einer Kappe zwecks pneumatischer Austragung abgedichtet. Die Entkopplung geschieht durch weiche Pneumatikrohre.

Bei einer aus der DE-GM 89 00 498 oder der DE-PS 38 34 191 C2 bekannten Vorrichtung wird das Wägegut zunächst über eine Dosiervorrichtung mit einem darunter angeordneten Wägegutbehälter zugeführt, der mit einer Wiegeeinrichtung verbunden ist. Das abgewogene Wiegegut wird dann über einen unteren Auslauf in einen darunter angeordneten Förderbehälter abgelassen. Nach dem Verschließen des Förderbhälters wird das Wägegut dann mittels einer pneumatischen Fördereinrichtung über eine Förderleiste einem Mischer od.dgl. zugeführt.

Der Nachteil der bekannten Vorrichtungen besteht zum einen in der großen Bauhöhe, die dadurch entsteht, daß zumindest der Wägegutbehälter und der Förderbehälter übereinander angeordnet sein müssen. Die beiden übereinander angeordneten Behälter sind sowohl bezüglich der Herstellung als auch der Reinigung aufwendig und teuer.

Der Erfindung liegt die Aufgabe zugrunde, die bekannten Vorrichtungen zum Zumessen von pulver- oder granulatförmigem Wägegut so zu verbessern, daß bei einfacher Konstruktion und Handhabung einerseits eine gute Abdichtung und andererseits eine schnelle und sichere Entkopplung beim Wiegen sowie eine Entlüftung möglich ist.

Diese Aufgabe wird erfindungsgemäß durch eine Vorrichtung mit den Merkmalen des Anspruchs 1 gelöst.

Bei der erfindungsgemäßen Vorrichtung kann in vorteilhafter Weise durch Vertikalbewegung des Deckels oder des Wägegutbehälters ein Spalt zwischen Deckel und Wägegutbehälter gebildet werden, der beim Einfüllen des Wägeguts in den Wägegutbehälter eine Entlüftung möglich macht und gleichzeitig eine Entkopplung beim Wiegen bewirkt. Anschließend kann durch eine Vertikalbewegung in der umgekehrten Richtung in einfacher Weise schnell und sicher der Wägegutbehälter dichtend verschlossen werden, um in den Förderbetrieb überzugehen. Der bei der erfindungsgemäßen Vorrichtung einzige Behälter, der gleichzeitig als Wägegutbehälter und als Förderbehälter dient, bewirkt eine Reduzierung der gesamten Bauhöhe und eine Verringerung der Herstellungskosten. Auch die Reinigungs- und Wartungskosten verringern sich. Der Zumeßvorgang des Wägeguts kann durch die kleinen Bewegungen des Deckels sehr schnell erfolgen, insbesondere auch die Umschaltung in den Förderbetrieb.

Durch die in den Unteransprüchen aufgeführten Maßnahmen sind vorteilhafte Weiterbildungen und Verbesserungen der im Anspruch 1 angegebenen Zumeßvorrichtung möglich.

Zur Verbesserung der Förderung des Wägeguts in der Förderleitung ist dort wenigstens ein die Förderung unterstützendes Fördergerät angeordnet, insbesondere mehrere Fördergeräte in Abständen. Derartige Fördergeräte können bevorzugt nach Art einer Venturi-Düse ausgebildet sein, da sich derartige Fördergeräte besonders gut zur Förderung von pulver- oder granulatförmigem Wägegut eignen. Durch eine derartige Anordnung von Fördergeräten kann die Förderleitung eine praktisch beliebige Länge aufweisen.

Der von der Wiegeeinrichtung gehaltene Wägegutbehälter wird in der Zumeßposition während des Zumeßvorgangs berührungslos gegenüber anderen umgebenden Einrichtungen gehalten, beispielsweise gegenüber dem Deckel, um Beeinflussungen des Meßergebnisses auszuschließen.

Zur Relativbewegung zwischen Deckel und Wägegutbehälter eignet sich insbesondere eine pneumatische Hubeinrichtung für die mit dem Wägegutbehälter verbundene Wiegeeinrichtung.

Eine vorteilhafte konstruktive Ausgestaltung besteht darin, daß der Deckel einen oberen ringartigen Randbereich des Wägegutbehälters um- und untergreift, daß ein Dichtungselement zwischen dem untergreifenden Bereich des Deckels und der Unterseite des ringartigen Randbereichs vorgesehen ist und daß die Hubmittel bei vertikal fixierter Position des Deckels zur Vertikalbewegung des Wägegutbehälters ausgebildet sind. Bei dieser Anordnung kann der Wägegutbehälter durch Absenkung dichtend durch den Deckel verschlossen werden.

Um zu gewährleisten, daß auch die Förderleitung während des Zumeßvorgangs den Wiegevorgang nicht störend beeinflußt, ist der Wägegutbehälter im Bereich eines unteren Auslasses mit einem Abschließventil versehen und weist eine Anschlußvorrichtung für die Förderleitung auf, die in der Zumeßposition ein Lösen der Förderleitung vom Wägegutbehälter gestattet. Wegen der gelösten Förderleitung ist eine diesbezügliche Beeinträchtigung des Meßergebnisses nicht mehr möglich.

Eine vorteilhafte konstruktive Ausgestaltung der Anschlußvorrichtung besteht darin, daß diese ein sich zum freien Ende hin verjüngendes, mit dem Wägegutbehälter über das Abschließventil verbundenes Rohrstück aufweist, das in der Förderposition dichtend in eine Öffnung eines mit der Förderleitung verbundenen Anschlußstücks eingreift. Dieses Anschlußstück ist zweckmäßigerweise ebenfalls als Rohrstück, insbesondere als Winkelrohr, ausgebildet. Besonders geeignet ist ein vertikal nach unten mündendes, sich verjüngendes Rohrstück, wobei zur dichtenden Verbindung desselben mit dem Anschlußstück in der Förderposition und zum Lösen in der Zumeßposition Hubmittel für die Vertikalbewegung des Wägegutbehälters oder des Anschlußstücks vorgesehen sind. Wenn die Hubmittel am Wägegutbehälter angreifen, kann durch sie gleichzeitig durch Anheben des Wägegutbehälters der Kontakt desselben mit dem Anschlußstück und dem oberen Deckel gelöst werden, während beim nachfolgenden Absenken eine dichtende Verbindung des Wägegutbehälters einerseits mit dem Deckel und andererseits mit dem Anschlußstück erreicht wird, um den Fördervorgang des Wägeguts durchführen zu können.

Zur Gewährleistung einer dichtenden Verbindung des sich verjüngenden Rohrstücks mit der Öffnung im Anschlußstück ist das Rohrstück und/oder das Anschlußstück mit Dichtmitteln versehen. Eine zusätzliche vorteilhafte Maßnahme zur dichtenden Verbindung des Rohrstücks mit dem Anschlußstück besteht darin, daß Federmittel zum Anpressen des Anschlußstücks gegen das sich verjüngende Rohr in der Förderposition vorgesehen sind.

Eine alternative konstruktive Ausgestaltung der Anschlußvorrichtung besteht darin, daß diese als druckmittelbetätigbares Balgelement ausgebildet ist, das die Förderleitung oder eine mit dem Wägegutbehälter verbundene Abführleitung umgreift und das dichtend an die jeweils andere dieser beiden Leitungen angeschlossen ist. Bei belüftetem Balgelement liegt dieses nicht an der jeweils anderen Leitung an, so daß eine völlige mechanische Trennung erreicht wird, um das Meßergebnis nicht zu beeinträchtigen. Wird dagegen das Balgelement mit Druck beaufschlagt, so legt es sich dichtend um die jeweilige Leitung an, so daß eine dichtende Verbindung zwischen Förderleitung und Abführleitung hergestellt wird.

Ein Ausführungsbeispiel der Erfindung ist in der Zeichnung dargestellt und in der nachfolgenden Beschreibung näher erläutert. Es zeigen:
- Fig. 1: eine schematische Darstellung der gesamten Zumeßvorrichtung und
- Fig. 2: eine detaillierte, vergrößerte Darstellung des Wägegutbehälters mit einer Anschlußvorrichtung für die Förderleitung.

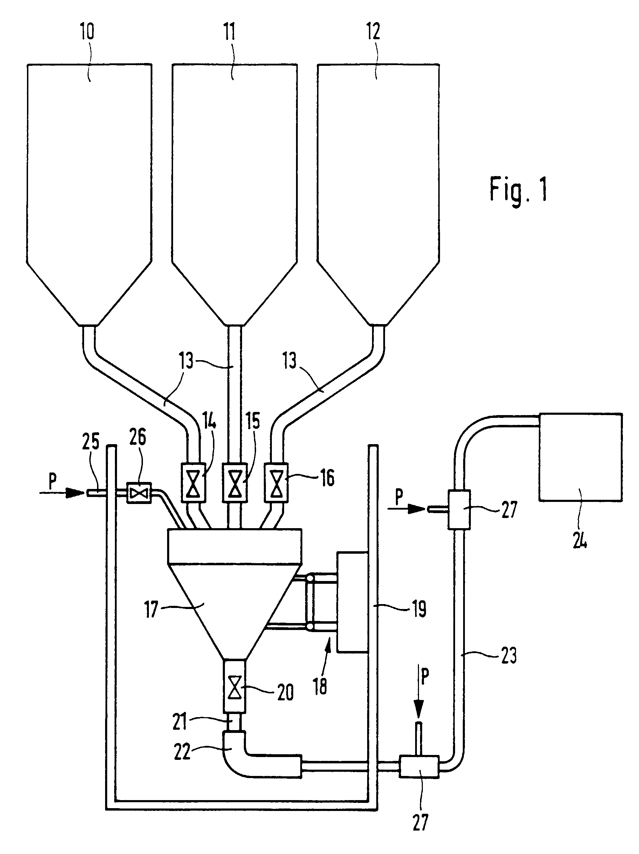

Bei der in Fig. 1 schematisch dargestellten Zumeßvorrichtung sind drei Vorratsbehälter 10 - 12 für verschiedenes pulver- oder granulatförmiges Wägegut oberhalb der übrigen Vorrichtung angeordnet. Beispielsweise kann das Wägegut in diesen Vorratsbehältern 10 - 12 unterschiedliche Farben aufweisen, die dann in einem bestimmten Verhältnis miteinander vermischt werden sollen. Die Zahl der Vorratsbehälter 10 - 12 kann praktisch beliebig sein. Bei diesen Vorratsbehältern kann es sich um feste Farbsilos handeln, in die das in Säcken angelieferte Wägegut eingefüllt wird, oder aber derartige Säcke dienen selbst als Vorratsbehälter und werden in entsprechenden Haltevorrichtungen aufgehängt.

Jeweils vom unteren Ende der Vorratsbehälter 10 - 12 aus erstrecken sich Zumeßleitungen 13 über ventilartige Dosiervorrichtungen 14 - 16 zu einem darunter angeordneten Wägegutbehälter 17. Diese Dosiervorrichtungen können gemäß dem eingangs angegebenen Stand der Technik jeweils Mittel zur Grob- und Feinstromdosierung aufweisen und werden in nicht dargestellter Weise von einer zentralen elektronischen Steuerung aus betätigt. Alternativ zu ventilartigen Dosiervorrichtungen können in an sich bekannter Weise auch Schneckendosierer oder andere Förderdosierer treten, bei denen es nicht erforderlich ist, daß die Vorratsbehälter 10 - 12 oberhalb des Wägegutbehälters 17 angeordnet sind.

Der Wägegutbehälter 17 ist horizontal verschiebbar seitlich an einer Wiegeeinrichtung 18 befestigt, die ihrerseits an einem den Wägegutbehälter 17 und die Wiegeeinrichtung 18 umfassenden Halteeinrichtung 19 angebracht ist. Diese Halteeinrichtung 19 kann rahmenartig oder gehäuseartig ausgebildet sein.

Der untere, konusartig sich verjüngende Bereich des Wägegutbehälters 17 mündet in einem Absperrventil 20, aus dem ein Rohrstück 21 nach unten herausragt. Das Rohrstück 21 greift in ein im wesentlichen als Winkelrohr ausgebildetes Anschlußstück 22 ein, an das eine Förderleitung 23 angeschlossen ist, zum Abführen des abgemessenen Wägeguts zu einem Misch- und/oder Transportbehälter. Hierbei kann es sich beispielsweise um einen Betonmischer handeln, in dem das beispielsweise als Farbgranulat ausgebildete Wägegut einer Betonmasse zugemischt wird. Es kann sich jedoch auch um einen Transportbehälter handeln, zum Abtransport des vermischten Wägeguts, oder aber auch um einen Vorratsbehälter, aus dem das vermischte Wägegut nach Bedarf entnommen werden kann.

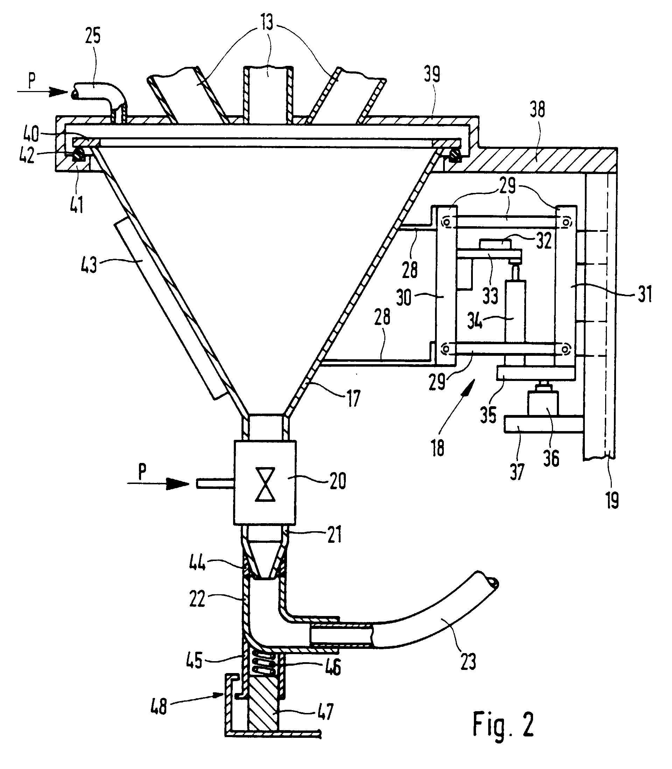

Der Wägegutbehälter 17 dient nicht nur zum Abwiegen verschiedener Sorten von zugeführtem Wägegut, sondern auch als Förderbehälter und Bestandteil der Fördereinrichtung für das abgemessene Wägegut zum Misch- und/oder Transportbehälter 24 hin. Zum Abwiegen werden zunächst nacheinander die Dosiervorrichtungen 14 - 16 bei geschlossenem Absperrventil 20 geöffnet und das entsprechende Wägegut jeweils so lange zugeführt, bis in der Wiegeeinrichtung 18 das Erreichen des vorgesehenen Gewichts erkannt wird. Nach dem Zumeßvorgang sind die Dosiervorrichtungen 14 - 16 abgesperrt, und der Wägegutbehälter 17 wird hermetisch verschlossen, wie dies im Zusammenhang mit Fig. 2 noch erläutert wird. Bei jetzt geöffnetem Absperrventil 20 wird Druckluft mit dem Druck P über eine Druckleitung 25 und ein Druckventil 26 dem Wägegutbehälter 17 zugeführt. Hierdurch wird das Wägegut aus dem Wägegutbehälter 17 in die Förderleitung 23 und über diese in den Misch- und/oder Transportbehälter 24 transportiert. Zur Unterstützung des Transports des beispielsweise granulatförmigen Wägeguts durch die Förderleitung 23 weist diese in bestimmten Abständen zusätzliche Fördergeräte 27 auf, die im Ausführungsbeispiel nach Art von Venturi-Düsen ausgebildet sind. Hierzu wird Druckluft mit dem Druck P in Strömungsrichtung in ein düsenartiges Rohr eingeblasen, das vom Wägegut durchströmt wird. Auch andere bekannte Fördergeräte für derartiges Wägegut können hier eingesetzt werden. Nach dem Entleeren des Wägegutbehälters 17 wird das Absperrventil 20 wieder verschlossen, und es kann ein erneuter Dosier- und Wiegevorgang durchgeführt werden.

In Fig. 2 sind der Wägegutbehälter 17 und die Wiegeeinrichtung 18 vergrößert und detaillierter dargestellt.

Die Wiegeeinrichtung 18 entspricht im wesentlichen der aus der eingangs angegebenen DE-GM 89 00 498 bekannten Wiegeeinrichtung, wobei auch andere bekannte Wiegeeinrichtungen eingesetzt werden können. Der Wägegutbehälter 17 ist mittels zweier Haltearme 28 an einem Parallelogrammgestänge 29 befestigt, und zwar am linken der beiden vertikal zueinander bewegbaren Stangen 30, 31. Diese zweite vertikale Stange 31 ist vertikal verschiebbar an der Halteeinrichtung 19 angebracht. Das Parallelogrammgestänge 29 ist selbstverständlich in nicht dargestellter Weise so ausgebildet, daß ein horizontales Verschwenken des Wägegutbehälters 17 ausgeschlossen ist. An der vertikalen Stange 30 ist horizontal ein mit einer Wägezelle 32 versehener Meßarm 33 angeordnet, der sich mit seinem freien Endbereich auf einem vertikalen Auflageelement 34 abstützt, welches starr über ein Verbindungselement 35 mit der vertikalen Stange 31 verbunden ist. Das Verbindungselement 35 wird unten durch ein pneumatisches Hubelement 36 abgestützt, das auf einer starr mit der Halteeinrichtung 19 verbundenen Halterung 37 aufliegt.

An einem starr mit der Halteeinrichtung 19 verbundenen Haltearm 38 ist ein die nach oben weisende öffnung des Wägegutbehälters 17 überdeckender Deckel 39 fixiert. An diesem Deckel 39 münden die drei Zumeßleitungen 13 in hermetisch abgedichteter Anordnung. Weiterhin mündet an diesen Deckel 39 entsprechend die Druckleitung 25. Der Deckel 39 um- und untergreift umfangsseitig einen Abschlußring 40 am oberen Ende des Wägegutbehältes 17, der sich radial nach außen erstreckt. Der diesen Abschlußring 40 untergreifende Bereich 41 des Deckels 39 trägt eine Ringdichtung 42, die in der dargestellten, abgesenkten Position des Wägegutbehälters 17 dichtend am Abschlußring 40 anliegt.

Seitlich am Wägegutbehälter 17 ist eine Rütteleinrichtung 43 angebracht, um das Ausfließen des Wägeguts zu unterstützen.

Das Absperrventil 20 am unteren Auslaß des Wägegutbehälters 17 ist beispielsweise als druckbetätigtes Balgventil ausgebildet, das in nicht dargestellter, jedoch üblicher Weise einen durchgehenden Schlauch aufweist, der von einem Balg umgeben ist. Bei Druckbeaufschlagung drückt der Balg den Schlauch so zusammen, daß eine Absperrung erreicht wird.

Das nach unten aus dem Absperrventil 20 herausragende Rohrstück 21 ist an seinem freien Ende konisch verjüngt und greift mit dem verjüngten Ende in die Rohröffnung des Anschlußstücks 22 ein. Zur dichtenden Anlage des Rohrstücks 21 ist die Rohröffnung des Anschlußstücks 22 mit einem elastischen, abdichtenden Material 44 versehen. Hierzu kann der Endbereich des rohrartigen Anschlußstücks 22 entweder aus diesem abdichtenden Material 44 bestehen, oder er ist nur mit einem solchen Material beschichtet. Umgekehrt kann selbstverständlich auch das elastische Material am Rohrstück 21 angeordnet sein, oder das Rohrstück 21 kann aus diesem elastischen Material bestehen.

Das als Winkelrohr ausgebildete Anschlußstück 22 weist nach unten hin einen zylinderartigen Fortsatz 45 auf, in den ein kolbenartiges, mit einer Druckfeder 46 versehenes Element 47 eingreift. Durch die Druckfeder 46 wird das Anschlußstück 22 nach oben gegen das Rohrstück 21 gedrückt, wobei die Bewegung nach oben durch eine Anschlagvorrichtung 48 begrenzt ist. Die Förderleitung 23 ist dichtend mit dem anderen Ende des Anschlußstücks 22 verbunden.

Zur Zumessung des Wägeguts wird zunächst durch Betätigung des Hubelements 36 der Wägegutbehälter 17 so weit angehoben, daß der Abschlußring 40 von der Ringdichtung 42 abhebt und das Rohrstück 21 aus dem Anschlußstück 22 herausgehoben wird. Infolge der Anschlagvorrichtung 48 kann das Anschlußstück 22 dieser Vertikalbewegung nicht vollständig folgen. Der Wägegutbehälter 17 steht jetzt nicht mehr mit dem Deckel 39 und dem Anschlußstück 22 in Verbindung, sondern nur noch mit der Wiegeeinrichtung 18, so daß das Meßergebnis verfälschende Einflüsse durch unerwünschte Kontakte des Wägegutbehälters 17 ausgeschlossen sind. Bei geschlossenem Absperrventil 20 werden nun nacheinander verschiedene Sorten von Wägegut über die Zumeßleitungen 13 und die Dosiervorrichtungen 14 - 16 zugeführt, bis jeweils die Wägezelle 32 das Erreichen des eingestellten Gewichts anzeigt. Die hierzu erforderliche elektronische Steuerung zum automatischen Betrieb ist zur Vereinfachung nicht dargestellt.

Wenn die Zumessung von Wägegut beendet ist, wird durch Betätigung des Hubelements 36 der Wägegutbehälter 17 mit seinem Abschlußring 40 auf die Ringdichtung 42 abgesenkt, so daß der Wägegutbehälter 17 jetzt oben hermetisch verschlossen ist. Die Dosiervorrichtungen 14 - 16 sind zu diesem Zeitpunkt ebenfalls abgeschlossen. Bei der Absenkung des Wägegutbehälters 17 gelangt das Rohrstück 21 in dichtenden Eingriff mit dem Abschlußstück 22 und ist nunmehr dichtend mit der Förderleitung 23 verbunden. Nach öffnen des Absperrventils 20 und Druckbeaufschlagung des Wägegutbehälters 17 über die Druckleitung 25 kann nun das Wägegut über die Förderleitung 23 zum Misch- und/oder Transportbehälter 24 gefördert werden.

In Abwandlung des dargestellten Ausführungsbeispiels kann zur Erreichung der Relativbewegung zwischen Wägegutbehälter 17 und Deckel 39 prinzipiell auch der Deckel 39 horizontal bewegt werden. Dasselbe gilt für das Anschlußstück 22.

Wesentlich für das Anschlußstück 22 sind die vollständige Trennung vom Wägegutbehälter 17 während der Zumischung und die dichtende Verbindung des Wägegutbehälters 17 mit der Förderleitung 23 während des Förderbetriebs. Alternativ zur Anordnung 21, 22 kann daher beispielsweise das Absperrventil 20 starr mit einem Winkelrohr verbunden sein, das in eine dichtend mit der Förderleitung 23 verbundene Anschlußvorrichtung eingreift. In der Anschlußvorrichtung umgibt ein druckmittelbetätigbarer Balg das Winkelrohr, so daß dieses im entlüfteten Zustand freiliegt und im belüfteten Zustand dichtend mit der Anschlußvorrichtung und damit mit der Förderleitung 23 verbunden ist.

Die Druckleitung 25 für den Förderdruck kann prinzipiell auch am Wägegutbehälter 17 münden. Anstelle dieser Druckleitung 25 und der Förderung des Wägeguts mittels eines Überdrucks kann die Förderleitung 23 auch mit einem Unterdruck beaufschlagt werden, durch den das Wägegut in die Förderleitung 23 eingesaugt wird.

## Patentansprüche

1. Vorrichtung zum Zumessen von pulver- oder granulatförmigem Wägegut, mit wenigstens einem Vorratsbehälter (10-12), von dem aus sich eine Zumeßleitung (13) zur Zuführung von Wägegut über eine Dosiervorrichtung (14-16) zu einem Wägegutbehälter (17) erstreckt, der mit einer Wiegeeinrichtung (18) zur Abmessung des Wägeguts versehen ist, und mit einer Fördereinrichtung zum Abführen des abgewogenen Wägeguts vom Wägegutbehälter (17) über eine Förderleitung (23) zu einem Misch- und/oder Transportbehälter (24), wobei der Wägegutbehälter (17) gleichzeitig als Förderbehälter und Bestandteil der Fördereinrichtung ausgebildet ist, und der im Förderbetrieb dichtend verschlossene Wägegutbehälter (17) zum Abführen des abgewogenen Wägeguts über die am Wägegutbehälter (17) hierzu angeschlossene Förderleitung (23) mit einem Förderdruck (P) beaufschlagbar ist, dadurch gekennzeichnet, daß der Wägegutbehälter (17) einen oberen Abschlußdeckel (39) aufweist, in den die wenigstens eine Zumeßleitung (13) mündet, und daß Hubmittel (36) zur Vertikalbewegung des Deckels (39) oder des Wägegutbehälters (17) vorgesehen sind, wobei in einer Zumeßposition ein Spalt zwischen Deckel (39) und Wägegutbehälter (17) gebildet wird und in einer Förderposition der Deckel (39) dichtend am Wägegutbehälter (17) anliegt.

2. Vorrichtung nach Anspruch 1, gekennzeichnet durch die Anordnung wenigstens eines die Förderung des Wägeguts unterstützenden Fördergeräts (27) in der Förderleitung (23), vorzugsweise mehrerer voneinander beabstandeter Fördergeräte, wobei das wenigstens eine Fördergerät (27) insbesondere nach Art einer Venturi-Düse ausgebildet ist.

3. Vorrichtung nach Anspruch 1 oder 2, dadurch gekennzeichnet, daß der von der Wiegeeinrichtung (18) gehaltene Wägegutbehälter (17) in der Zumeßposition berührungslos gegenüber anderen umgebenden Einrichtungen gehalten wird.

4. Vorrichtung nach einem der vorhergehenden Ansprüche, dadurch gekennzeichnet, daß die mit dem Wägegutbehälter (17) verbundene Wiegeeinrichtung (8) eine insbesondere pneumatische Hubeinrichtung (36) als Hubmittel aufweist.

5. Vorrichtung nach einem der vorhergehenden Ansprüche, dadurch gekennzeichnet, daß der Deckel (39) einen oberen ringartigen Randbereich (40) des Wägegutbehälters (17) um- und untergreift, daß ein Dichtungselement (42) zwischen dem untergreifenden Bereich (41) des Deckels (39) und der Unterseite des ringartigen Randbereichs (40) vorgesehen ist und daß die Hubmittel (36) bei vertikal fixierter Position des Deckels (39) zur Vertikalbewegung des Wägegutbehälters (17) ausgebildet sind.

6. Vorrichtung nach einem der vorhergehenden Ansprüche, dadurch gekennzeichnet, daß der Wägegutbehälter (17) im Bereich eines unteren Auslasses mit einem Abschließventil (20) versehen ist und eine Anschlußvorrichtung für die Förderleitung (23) aufweist, die in der Zumeßposition ein Lösen der Förderleitung (23) vom Wägegutbehälter (17) gestattet, wobei die Anschlußvorrichtung für die Förderleitung (23) insbesondere als druckmittelbetätigbares Balgelement ausgebildet ist, das die Förderleitung (23) oder eine mit dem Wägegutbehälter (17) verbundene Abführleitung umgreift und das dichtend in die jeweils andere dieser beiden Leitungen angeschlossen ist.

7. Vorrichtung nach Anspruch 6, dadurch gekennzeichnet, daß die Anschlußvorrichtung ein sich zum freien Ende hin verjüngendes, mit dem Wägegutbehälter (17) über das Abschließventil (20) verbundenes Rohrstück (21) aufweist, das in der Förderposition dichtend in eine Öffnung eines mit der Förderleitung (23) verbundenen Anschlußstücks (22) eingreift, wobei das Anschlußstück (22) vorzugsweise ebenfalls als Rohrstück, insbesondere als Winkelrohr, ausgebildet ist.

8. Vorrichtung nach Anspruch 7, dadurch gekennzeichnent, daß das sich verjüngende Rohrstück im wesentlichen vertikal nach unten mündet und daß zur dichtenden Verbindung des sich verjüngenden Rohrstücks (21) mit dem Anschlußstück (22) in der Förderposition und zum Lösen in der Zumeßposition Hubmittel (36) für eine Vertikalbewegung des Wägegutbehälters (17) oder des Anschlußstücks (22) vorgesehen sind.

9. Vorrichtung nach Anspruch 7 oder 8, dadurch gekennzeichnet, daß das sich verjüngende Rohrstück (21) und/ oder die Öffnung im Anschlußstück (22) mit Dichtmitteln (44) versehen ist und/oder daß Federmittel (46) zum Anpressen des Anschlußstücks gegen das sich verjüngende Rohrstück (21) in der Förderposition vorgesehen sind.

## Claims

1. Device for the metering of powdery or granular material to be weighed, having at least one storage bin (10-12) from which extends a metering line (13) for feeding material to be weighed via a metering unit (14-16) to a weighing material container (17), and provided with a weighing device (18) for the measurement of material to be weighed, and having a conveyor to take the weighed material from the weighing material container (17) via a delivery line (23) to a mixing and or transport container (24), wherein the weighing material container (17) simultaneously serves as transfer container and as part of the conveyor, and the weighing material container (17) which is completely sealed in conveying mode can be supplied with a conveying pressure (P) to take away the weighed material via the delivery line (23) connected to the weighing material container (17) for this purpose, characterized in that the weighing material container (17) has a top sealing cover (39) into which leads at least one metering line (13), and that means of lifting (36) are provided for vertical movement of the cover (39) or of the weighing material container (17), wherein in a metering position a gap is formed between cover (39) and weighing material container (17), and in a conveying position the cover (39) is in sealing contact with the weighing material container (17).

2. Device according to claim 1, characterized in that at least one of the conveyor units (27) assisting in conveyance of the material to be weighed is located in the delivery line (23), and preferably several conveyor units spaced apart from one another, wherein at least one conveyor unit (27) is in particular in the form of a Venturi tube.

3. Device according to claim 1 or 2, characterized in that weighing material container (17) held in the metering position by the weighing device (18), is held without being in contact with other surrounding units.

4. Device according to any of the preceding claims, characterized in that the weighing device (8) connected to the weighing material container (17) has a lifting device (36), in particular pneumatic, as a means of lifting.

5. Device according to any of the preceding claims, characterized in that the cover (39) surrounds and engages beneath an upper annular border area (40) of the weighing material container (17), that a seal element (42) is provided between the area (41) of the cover (39) engaging below and the underside of the annular border area (40), and that in the vertical fixed position of the cover (39) the means of lifting (36) are designed for vertical movement of the weighing material container (17).

6. Device according to any of the preceding claims, characterized in that the weighing material container (17) is provided with a shut-off valve (20) in the area of a bottom outlet, and has a connection device for the delivery line (23) permitting release of the delivery line (23) from the weighing material container (17) in the metering position, wherein the connection device for the delivery line (23) is in particular in the form of a pressure-medium-actuable diaphragm element which encompasses the delivery line (23) or a discharge line connected to the weighing material container (17), and makes a sealing connection with the other of these two lines.

7. Device according to claim 6, characterized in that the connection device has a pipe length (21) tapering towards the free end and connected to the weighing material container (17) via the shut-off valve (20), which makes sealing engagement with an orifice of a connection element (22) connected to the delivery line (23), wherein the connection element (22) is preferably likewise in the form of a pipe length, in particular an elbow.

8. Device according to claim 7, characterized in that the tapering pipe length leads essentially vertically downwards and that means of lifting (36) for vertical movement of the weighing material container (17) or the connection element (22) are provided to permit sealing connection of the tapering pipe length (21) to the connection element (22) in the conveying position, and for release in the metering position.

9. Device according to claim 7 or 8, characterized in that the tapering pipe length (21) and/or the orifice in the connection element (22) is provided with means of sealing (44) and/or that means of springing (46) are provided to press the connection element against the tapering pipe length in the conveying position.

## Revendications

1. Dispositif pour le dosage d'un produit à peser, pulvérulent ou granuleux, comportant au moins un réservoir de stockage (10 à 12), à partir duquel s'étend une conduite de dosage (13), pour l'amenée du produit à peser, par l'intermédiaire d'un dispositif de dosage (14 à 16), vers un réservoir de produit à peser (17), qui est doté d'un dispositif de pesée (18) pour peser le produit, et comportant un dispositif de convoyage pour l'évacuation du produit pesé, à partir du réservoir de produit à peser, par une conduite de convoyage (23), vers un réservoir de mélange et/ou de transport (24), le réservoir de produit à peser (17) étant conformé en même temps en tant que réservoir de convoyage et en tant que partie intégrante du dispositif de convoyage, et le réservoir de produit à peser (17), fermé de manière étanche pendant le convoyage, recevant une pression de convoyage (P), pour l'évacuation du produit pesé, par l'intermédiaire de la conduite de convoyage (23), raccordée à cet effet au réservoir de produit à peser (17), caractérisé en ce que le réservoir de produit à peser (17) comporte un couvercle de fermeture (39) supérieur, dans lequel débouche la au moins une conduite de dosage (13), et en ce que sont prévus des moyens de levage (36), pour le déplacement vertical du couvercle (39) ou du réservoir de produit à peser (17), une fente étant formée entre le couvercle (39) et le réservoir de produit à peser (17), dans une position de dosage et le couvercle (39) s'appliquant de manière étanche contre le réservoir de produit à peser (17), dans une position de convoyage.

2. Dispositif selon la revendication 1, caractérisé par le fait qu'il est prévu au moins un appareil de convoyage (27), favorisant l'acheminement du produit à peser, dans la conduite de convoyage (23), de préférence plusieurs appareils de convoyage espacés les uns des autres, au moins un appareil de convoyage (27) étant conçu en particulier à la manière d'une buse de Venturi.

3. Dispositif selon la revendication 1 ou 2, caractérisé en ce que le réservoir de produit à peser (17), maintenu par le dispositif de pesée (18), est maintenu dans la position de dosage, sans contact avec d'autres dispositifs environnants.

4. Dispositif selon l'une des revendications précédentes, caractérisé en ce que le dispositif de pesée (8), relié au réservoir de produit à peser (17), comporte comme moyen de levage un dispositif de levage (36) en particulier pneumatique.

5. Dispositif selon l'une des revendications précédentes, caractérisé en ce que le couvercle (39) entoure et passe sous une zone de bordure (40) supérieure, du type anneau, du réservoir de produit à peser (17), en ce qu'un élément d'étanchéité (42) est prévu entre la zone (41) du couvercle (39), passant dessous, et la face inférieure de la zone de bordure (40) du type anneau et en ce que les moyens de levage (36) sont conçus, en cas de position fixée verticalement du couvercle (39), pour le déplacement vertical du réservoir de produit à peser (17).

6. Dispositif selon l'une des revendications précédentes, caractérisé en ce que le réservoir de produit à peser (17) est pourvu, dans la zone d'une sortie inférieure, d'une vanne de fermeture (20) et comporte un dispositif de raccordement pour la conduite de convoyage (23), qui, dans la position de dosage, autorise un détachement de la conduite de convoyage (23) et du réservoir de produit à peser (17), le dispositif de raccordement de la conduite de convoyage (23) étant conformé en particulier en tant qu'élément à soufflet actionnable au moyen d'un fluide sous pression, qui entoure la conduite de convoyage (23) ou une conduite d'évacuation, reliée au réservoir de produit à peser (17) et qui est raccordé de manière étanche dans l'autre de ces deux conduites.

7. Dispositif selon la revendication 6, caractérisé en ce que le dispositif de raccordement comporte une pièce tubulaire (21), se rétrécissant vers l'extrémité libre, reliée au réservoir de produit à peser (17), par la vanne de fermeture (20), laquelle, dans la position de convoyage, s'engage de manière étanche dans une ouverture d'une pièce de raccordement (22), reliée à la conduite de convoyage (23), la pièce de raccordement (22) étant conformée de préférence également en tant que pièce tubulaire, en particulier en tant que tube coudé.

8. Dispositif selon la revendication 7, caractérisé en ce que la pièce tubulaire se rétrécissant débouche sensiblement verticalement vers le bas et en ce que pour la liaison d'étanchéité de la pièce tubulaire (21) se rétrécissant avec la pièce de raccordement (22) dans la position de convoyage et pour la séparation dans la position de dosage, des moyens de levage (36) sont prévus pour un déplacement vertical du réservoir de produit à peser (17) ou de la pièce de raccordement (22).

9. Dispositif selon la revendication 7 ou 8, caractérisé en ce que la pièce tubulaire (21) se rétrécissant et/ou l'ouverture dans la pièce de raccordement (22) est pourvue de moyens d'étanchéité (44) et/ou en ce que des moyens à ressort (46) sont prévus pour presser la pièce de raccordement contre la pièce tubulaire (21) se rétrécissant, dans la position de convoyage.
